# EUROPÄISCHE PATENTSCHRIFT

(11) **EP 3 655 652 B1**
(45) Veröffentlichungstag und Bekanntmachung des Hinweises auf die Patenterteilung: **20.04.2022**
(21) Anmeldenummer: 18731756.5
(22) Anmeldetag: 07.06.2018
(51) Int. Cl.: F04B 39/06, F04B 39/12

(54) **HUBKOLBENMASCHINE MIT KÜHLEINRICHTUNG**
RECIPROCATING PISTON MACHINE WITH COOLING DEVICE
MACHINE À PISTON ALTERNATIF DOTÉE D'UN DISPOSITIF DE REFROIDISSEMENT

(30) Priorität: 21.07.2017 DE 102017116562; 26.07.2017 DE 102017116870
(43) Veröffentlichungstag der Anmeldung: 27.05.2020
(73) Patentinhaber: Voith Patent GmbH, 89522 Heidenheim (DE)
(72) Erfinder: BURKAUSKAS, Marius, 09405 Zschopau (DE)
(74) Vertreter: Voith Patent GmbH - Patentabteilung
(86) Internationale Anmeldenummer: PCT/EP2018/064987
(87) Internationale Veröffentlichungsnummer: WO 2019/015855

(56) Entgegenhaltungen:
- CH-A- 233 934
- DE-A1- 10 138 070
- DE-A1- 10 242 544

## Beschreibung

Die Erfindung betrifft eine Hubkolbenmaschine zur Verdichtung eines Fluides, insbesondere Umgebungsluft, für ein Druckluftsystem eines Kraftfahrzeugs.

Derartige Hubkolbenmaschinen sind bekannt und umfassen ein Zylindergehäuse, einen Kolben, der im Kolbenraum des Zylindergehäuses auf- und abwärts bewegbar ist, und einen Zylinderkopf mit einer Ventilträgerplatte. Zur Kühlung der verdichteten Luft ist ein Kühlkanal vorgesehen, der zumindest einen Teilbereich des Zylinderkopfs durchläuft.

Um die Leistung des Verdichters zu verbessern, ist es insbesondere wichtig, eine effiziente Kühlung zu gewährleisten. Die Kühlung hat zwei wesentliche Aufgaben. Einmal muss der Totpunktbereich oder auch das Totvolumen, also der Bereich zwischen Ventilträgerplatte und der oberen Kolbenstellung gekühlt werden, da hier die Kompressionsabwärme am größten ist. Zum anderen muss die komprimierte Luft runtergekühlt werden, bevor sie an die Luftaufbereitung weitergeleitet werden kann.

In diesen Bereichen entsteht im Betrieb die größte Abwärme. Ist die Hitzeentwicklung im Totpunktbereich zu groß, hat dies zur Folge, dass sich der Ölauswurf vergrößert, da sich die Passmasse zwischen Kolbenringen und Zylinder ungünstig verändern. Mittels eines Ölabscheiders muss das Öl anschließend wieder aus der komprimierten Luft herausgeholt bzw. abgeschieden werden.

Aus dem Stand der Technik sind unterschiedliche Kühlkonzepte bzw. Kühlkanalführungen bekannt. So offenbart die EP 1 963 674 A1 ein Zylindergehäuse, das einen dem Zylindergehäuse zugeordneten Kühlwasserkanal mit einem Kühlwasseranschluss aufweist, wobei der Kühlwasserkanal bereichsweise durch den Zylinderkopf verläuft.

CH233934A offenbart einen Verdichter mit dem Auslass im Zylindergehäuse.

Weiterhin offenbart die EP1 963 674 A1 eine Kurbelgehäusekühlung, die eine beidseitige Umströmung des Kurbelwellengehäuses verbessert.

Aus der DE 2 410 705 A1 ist weiterhin eine wassergekühlte Ventilsitzplatte bekannt.

Eine der Aufgaben der Erfindung ist es, einen alternativen, verbesserten Aufbau des Zylinderkopfbereichs einer Hubkolbenmaschine vorzuschlagen, der eine effizientere Kühlung ermöglicht und die Effizienz des Kompressors verbessert.

Erfindungsgemäß wird diese Aufgabe mit einer Hubkolbenmaschine gemäß Anspruch 1 gelöst. Weitere vorteilhafte Ausgestaltungen und bevorzugte Lösungsvarianten sind in den hiervon abhängigen Unteransprüchen beschrieben.

Erfindungsgemäß wird eine Hubkolbenmaschine zur Verdichtung eines Fluides, insbesondere Umgebungsluft, für ein Druckluftsystem eines Kraftfahrzeugs vorgeschlagen, die ein verbessertes Kühlkonzept aufweist.

Im Sinne der Erfindung ist die Verbesserung des Kühlkonzeptes nicht auf die Führung des Kühlkanals beschränkt.

Ausgehend von einem bekannten Hubkolbenverdichter, umfasst auch der erfindungsgemäße Hubkolbenverdichter ein Zylindergehäuse und einen schichtweise aufgebauten Zylinderkopf. Dieser Zylinderkopf umfasst ein Ventilträgerelement mit einem Auslassventil, eine Kammerplatte und eine Kopfplatte mit einem Druckmediumauslass, wobei ein Kühlmediumkanal, zur Kühlung zumindest eines Teilbereiches des Zylinderkopfs, und ein Auslasskanal zur Verbindung des Auslassventils mit dem Druckmediumauslass vorgesehen sind, die zumindest Abschnittsweise durch Bauteile des Zylinderkopfs verlaufen.

Zur Verbesserung des Kühlkonzeptes ist vorgesehen, dass zumindest ein Teilabschnitt des Kühlmediumkanals und ein Teilabschnitt des Auslasskanals dem Zylindergehäuse zugeordnet sind. Das bedeutet, dass der Kühlmediumkanal durch den das Kühlwasser strömt, wie auch der Auslasskanal, also der Kanal durch den die komprimierte Luft bis zum Druckluftauslass strömt, Teilabschnitte aufweisen, die durch das Zylindergehäuse führen oder zumindest wesentlich durch dieses gebildet werden. Beispielsweise können diese in die Kontaktfläche zum Zylinderkopf eingearbeitet sein und mittels der Ventilträgerplatte verschlossen sein.

In einer möglichen Ausführung kann die Hubkolbenmaschine eine Verdichterstufe mit nur einem Hubkolben aufweisen.

Weiterhin kann vorgesehen sein, dass die Anschlüsse des Kühlmediumkanals im Zylinderkopfbereich angeordnet sind.

In einer bevorzugte Ausführung ist im Zylindergehäuse ein Wärmetauscherbereich vorgesehen, durch den zumindest ein Teilabschnitt des Kühlmediumkanals und ein Teilabschnitt des Auslasskanals verlaufen. Der Wärmtauscherbereich ist ein Bereich in dem abwechselnd Kühl- und Auslasskanalabschnitte angeordnet sind.

Weiterhin kann der Wärmetauscherbereich im Zylindergehäuse derart positioniert sein, dass zumindest ein Teilabschnitt des Kühlmediumkanals und zumindest ein Teilabschnitt des Auslasskanals durch das Zylindergehäuse und die Ventilträgerplatte gebildet werden.

So können der Teilabschnitt des Kühlmediumkanals und zumindest ein Teilabschnitt des Auslasskanals in einer Ebene angeordnet sein.

Weiterhin kann der Zylinderkopf vier Ebenen aufweisen, wobei in jeder Ebene zumindest ein Kanal verläuft, der ein Teilabschnitt des Kühlmediumkanals oder des Auslasskanals ist, so dass eine Kühlebene oder eine Auslasskanalebene gebildet wird.

In einer bevorzugten Ausführung sind die Kühlebenen und die Auslasskanalebenen abwechseln geschichtet und die Teilabschnitte des Kühlmediumkanals oder des Auslasskanals über Verbindungskanäle miteinander verbunden.

Dabei können die Kanäle in den Ebenen wie folgt gebildet werden. So kann zumindest ein Teilabschnitt des Auslasskanals durch die Kopfplatte und eine Trennplatte begrenzt sein. Zumindest ein Teilabschnitt des Kühlmediumkanals durch die Trennplatte und die Kammerplatte begrenzt sein. Zumindest ein Teilabschnitt des Auslasskanals durch das Ventilträgerelement und die Kammerplatte begrenzt sein. Zumindest ein Teilabschnitt des Kühlmediumkanals durch die Ventilträgerplatte und die Ventilzwischenplatte begrenzt sein.

Im Zylinderkopf kann weiterhin ein Einlassraum vorgesehen sein, der sich über alle Schichtbauteile erstreckt und gegenüber dem Zylinderraum im Zylindergehäuse mittels eines Lamellenventils abgegrenzt ist.

Zur Betätigung kann im Zylinderkopf weiterhin ein Ventilstößel angeordnet sein, mittels dem das Lamellenventil von der Ventilträgerplatte abhebbar ist, so dass der Einlassraum und der Zylinderraum verbunden werden, damit der Hubkolbenverdichter in eine Leerlauffunktion geschaltet werden kann.

Der Ventilstößel kann beispielsweise mittels Federkraft in eine erste Stellung und mittels eines Druckmediums über den Steuerluftanschluss in eine zweite Stellung, in der das Lamellenventil geöffnet ist, bewegbar sein.

Weitere Merkmale der erfindungsgemäßen Hubkolbenmaschine und weitere Vorteile der Erfindung ergeben sich aus der nachfolgenden Beschreibung bevorzugter Ausführungsbeispiele unter Bezugnahme auf die Zeichnungen.

Nachfolgend wird die Erfindung anhand von Skizzen näher erläutert.

In diesen zeigen:
- Figur 1: Schnitt durch den Kopfbereich einer erfindungsgemäßen Hubkolbenmaschine
- Figur 2: Schnittebene durch die Kopfplatte mit Druckluftkanal
- Figur 3: Schnittebene durch die Kammerplatte mit Kühlkanal
- Figur 4: Schnittebene durch die Kammerplatte mit Druckluftkanälen
- Figur 5: Schnittebene durch die Ventilträgerplatte mit Kühlkanal
- Figur 6a,b: Schnittebene durch das Zylindergehäuse mit Druckluftkanälen und Kühlkanälen

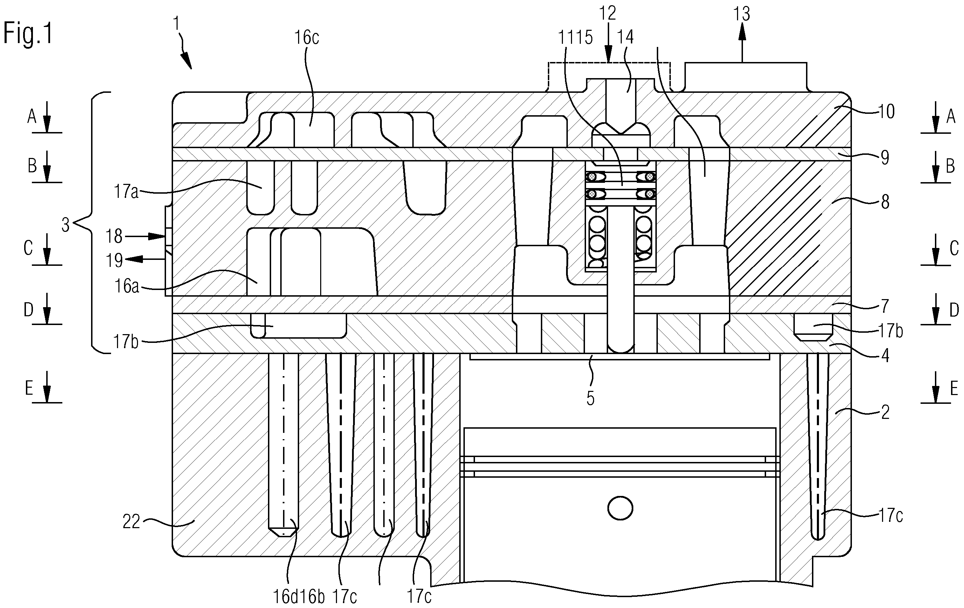

Figur 1 zeigt einen Schnitt durch den Kopfbereich einer erfindungsgemäßen Hubkolbenmaschine 1 bzw. eines Kompressors. Dargestellt sind das Zylindergehäuse 2 mit angedeutetem Zylinder und der Zylinderkopf 3. Ein derartiger Kompressor ist zur Komprimierung von Umgebungsluft für das Druckluftsystem eines Kraftfahrzeugs geeignet.

Eine der Besonderheiten des dargestellten einstufigen Kompressors 1 ist der neben dem Zylinderraum angeordnete Wärmetauscherbereich 22.

Ein Grundproblem derartiger Kompressoren ist, dass die Lufttemperatur sind mit steigender Kompression immer weiter erhöht. Im Bereich des oberen Totvolumens des Kolbenraums wird die höchste Temperatur erreicht, so dass hier ein großer Kühlbedarf besteht.

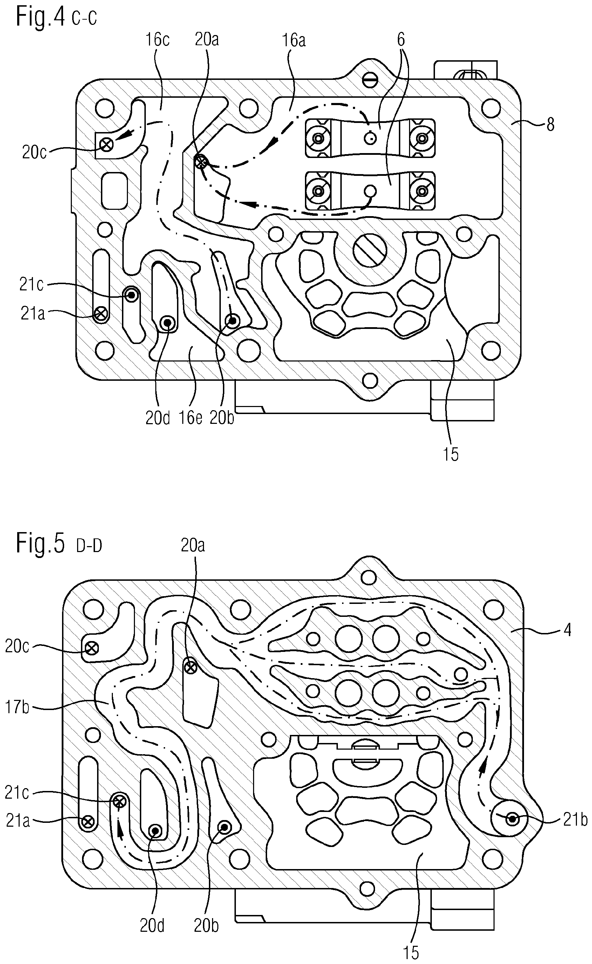

Der Zylinderkopf 3 des Kompressors 1 ist, wie dargestellt, schichtweise aufgebaut, wobei zwischen den Schichten jeweils eine Dichtmasse oder ein Dichtungselement angeordnet sein kann um die Bauteile gegeneinander abzudichten. Angrenzend an das Zylindergehäuse ist das Ventilträgerelement, bestehend aus einer Ventilträgerplatte 4 und einer Ventilzwischenplatte 7, angeordnet. Auf der Ventilträgerplatte 4 ist das Lamellenventil 5 angeordnet und an der Ventilzwischenplatte 7 sind die in Figur 4 dargestellten Auslassventile 6 angeordnet. In die Ventilträgerplatte 4 ist ein Kühlkanalabschnitt 17b eingearbeitet, wie auch in Fig. 5, dem Schnitt D-D dargestellt.

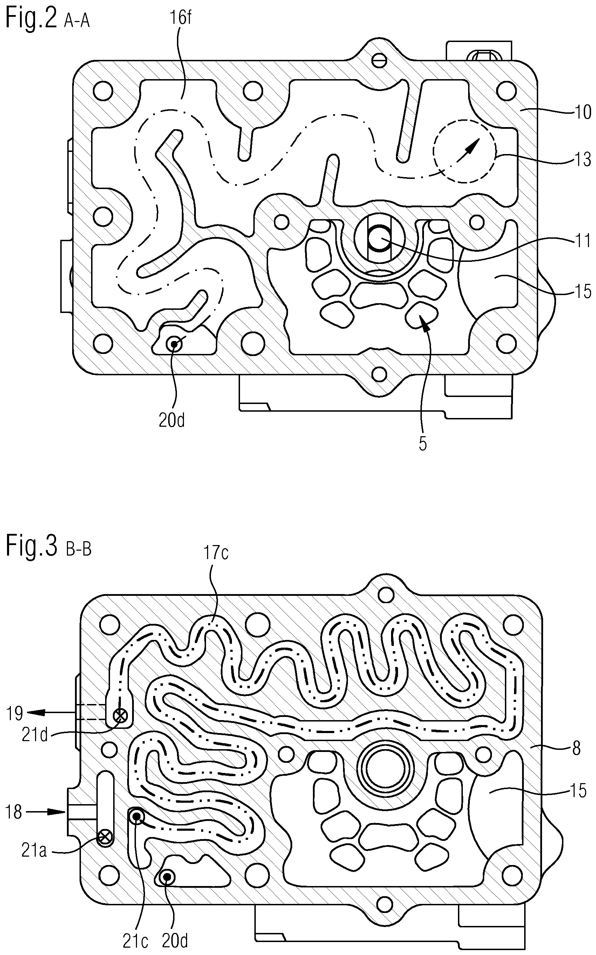

Auf dem Ventilträgerelement 4+7 ist die Kammerplatte 8 angeordnet, die zwei Kanalebenen B-B und C-C aufweist, wie in Bezug auf Figur 3 und 4 näher erläutert wird.

Den Abschluss bildet eine Kopfplatte 8 mit dem Druckmediumauslass 13 und einer zwischen Kopfplatte 10 und Kammerplatte 8 angeordneten Trennplatte 9. Die Trennplatte begrenzt somit den Kühlwasserkanal 17a und den Druckluftkanal 16c und dient auch der Wärmeübertragung zwischen den Ebenen A-A und B-B.

Da der Lufteinlass 12 nicht in der Schnittebene liegt wurde er hier nur angedeutet. Durch den Lufteinlass 12 gelangt die angesaugte Luft durch den Einlassraum und das Lamellenventil 5 in den Kolbenraum 23.

Weiterhin ist der im Zylinderkopf angeordnete Ventilstößel 11 dargestellt, mittels dem das Lamellenventil 5 für den Leerlaufbetrieb geöffnet werden kann. Durch Ansteuerung mittels Druckluft wird der Ventilstößel 11 gegen die Federkraft der dargestellten Feder nach unten bewegt und hebt das Lamellenventil 5 zumindest teilweise von der Ventilträgerplatte 4 ab. Dadurch entsteht eine Verbindung zwischen dem Zylinderraum 23 über den Einlassraum 15 zum Lufteinlass 12, so dass keine Kompression stattfinden kann.

In den Figuren 2 bis 6 sind die einzelnen Schnittebenen dargestellt, so dass die Kühlebenen und die Auslasskanalebenen sichtbar sind.

In Figur 2 ist die Schnittebene durch die Kopfplatte mit einem Teilabschnitt des Druckluftkanals 16f dargestellt. Die Luft kommt von unten durch den Verbindungskanal 20e und wird durch das Labyrinth bis zum Druckluftauslass 13 geleitet.

Zu erkennen ist auch der Einlassraum 15 sowie die Position des Ventilstößels 11 sowie die Durchgangsöffnungen zum Zylinderraum 23, die von dem Lamellenventil 5 abgedeckt werden.

In Figur 3 ist die Schnittebene B-B durch den oberen Bereich der Kammerplatte 8 mit dem Teilabschnitt des Kühlkanals 17 c dargestellt. Das Kühlwasser gelangt durch den Kühlwassereinlass 18 in den Zylinderkopf 3 und wird von dort über den Verbindungskanal 21a bis in das Zylindergehäuse 2 nach unten geleitet und durchströmt dann die Ebene E-E. Von Ebene E-E gelangt das Kühlwasser durch den Verbindungskanal 21b in die Ebene D-D und von dort über den Verbindungskanal 21c zurück in die Ebene B-B und zum Kühlwasserauslass 19.

In Figur 4 ist die Schnittebene C-C durch den unteren Bereich der Kammerplatte 8 mit dem Teilabschnitt des Druckluftkanals 16 a und 16 c dargestellt. In dieser Ebene ist zu erkennen wie die komprimierte Luft aus den Zylinderraum 23 über die Auslassventile 6 durch den Kompressor 1 geführt wird. Über den Verbindungskanal 20a gelangt die Luft ein erstes Mal bis in die Ebene E-E und von dort über den Verbindungskanal 20b zurück in die Ebene C-C um dann ein zweites Mal in durch die Verbindungskanäle 20c und 20d über die Ebene E-E geleitet zu werden. Über den Verbindungskanal 20d wird die Luft in die Ebene A-A geleitet.

In Figur 5 ist eine weitere Schnittebene D-D durch die Ventilträgerplatte 4 mit dem Kühlkanalabschnitt 17b dargestellt.

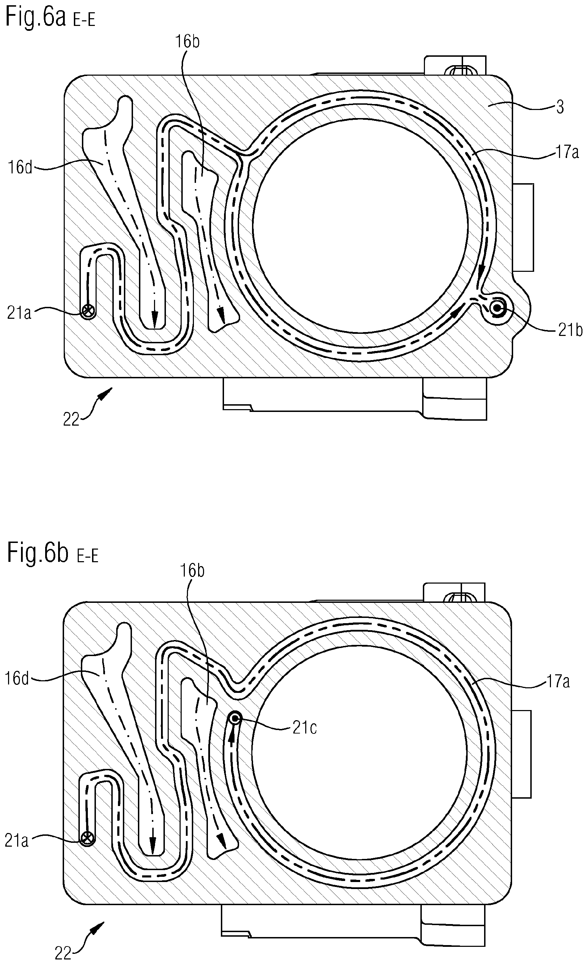

In den Figuren 6a, b sind zwei optionale Ausführungen der Schnittebene E-E durch das Zylindergehäuse 2 dargestellt. Hier ist der Wärmetauscherbereich 22 sehr gut zu erkennen. Abwechseln ist der Kühlwasserkanal 17a und die Luftkanäle 16b und 16d angeordnet. Der Zylinderbereich kann wie in den Varianten dargestellt umströmt werden.

Der besondere Vorteil dieses Aufbaus ist es, dass im Grunde zwei Wärmetauscherbereiche gebildet werden. Der Wärmetauscherbereich 22 im Zylindergehäuse 2 und der im Zylinderkopf gebildete Wärmetauscher der durch die Schichtung der Ebenen entsteht. Von oben gesehen sind Luftebenen und Kühlwasserebenen abwechseln zueinander angeordnet. Durch die optimierte Kühlung wird die Effizienz des Kompressors gesteigert.

Alternativ zu der dargestellten Kühlwasserführung, kann das Kühlwasser auch entgegengesetzt durch den Kompressor geführt werden. Zur weiteren Kühlleistungssteigerung können auch Noppen/Rippen oder Oberflächen vergrößernde Beschichtungen in den Kanälen vorgesehen sein.

Weiterhin ist die Ausführung nicht darauf beschränkt, dass wie in Fig 1 dargestellt, die Tiefe der Kanäle derart ausgelegt ist, dass diese in einer Ebene bleiben. Die Kanaltiefe kann auch derart ausgelegt sein, dass die Kanäle zumindest Teilweise in eine benachbarte Ebenen eingreift.

Es ist auch denkbar, dass mehr oder weniger Ebenen vorgesehen sind, wobei auch zwei Kühlwasser oder Luftebenen zueinander benachbart sein können.

Die Tiefe bzw. die Querschnitte der Kanäle sind in den Figuren nur beispielhaft dargestellt. Diese können auch ganz anders ausgelegt sein oder durch die Einarbeitung in zwei Platten gebildet werden.

### Bezugszeichenliste

- 1: Kompressor
- 2: Zylindergehäuse
- 3: Zylinderkopf
- 4: Ventilträgerplatte
- 5: Lamellenventil
- 6: Auslassventil
- 7: Ventilzwischenplatte
- 8: Kammerplatte
- 9: Trennplatte
- 10: Kopfplatte
- 11: Ventilstößel
- 12: Lufteinlass
- 13: Druckluftauslass
- 14: Steuerluftanschluss
- 15: Einlassraum
- 16a, b, c...: Auslasskanalabschnitte
- 17a, b, c: Kühlwasserkanalabschnitte
- 18: Kühlwassereinlass
- 19: Kühlwasserauslass
- 20a,..: Verbindungskanal Luft
- 21a,...: Verbindungskanal Wasser
- 22: Wärmetauscherbereich
- 23: Kolbenraum
- A-A: Schnittebene durch Kopfplatte
- B-B: Schnittebene durch Kammerplatte Kühlung
- C-C: Schnittebene durch Kammerplatte Druckluft
- D-D: Schnittebene durch Ventilträgerplatte
- E-E: Schnittebene durch Kurbelgehäuse

## Patentansprüche

1. Hubkolbenmaschine (1) zur Verdichtung eines Fluides, insbesondere Umgebungsluft, für ein Druckluftsystem eines Kraftfahrzeugs, umfassend ein Zylindergehäuse (2) in dem ein Kolben bewegbar ist und einem aus mehreren Platten (4, 7, 8, 9, 10)schichtweise aufgebauten Zylinderkopf (3), umfassend ein Ventilträgerelement (4, 7) mit einem Auslassventil (6), eine Kammerplatte (8) und eine Kopfplatte (10) mit einem Druckmediumauslass (13), wobei ein Kühlmediumkanal (17a, b, c) zur Kühlung zumindest eines Teilbereiches des Zylinderkopfs (3) und ein Auslasskanal (16a, b, c, d, e, f) zur Verbindung des Auslassventils (6) mit dem Druckmediumauslass (13) vorgesehen sind, die zumindest Abschnittsweise durch Bauteile des Zylinderkopfs (3) verlaufen,
wobei
zumindest ein Teilabschnitt des Kühlmediumkanals (17a, b, c) und ein Teilabschnitt des Auslasskanals (16a, b, c, d, e, f) dem Zylindergehäuse (2) zugeordnet sind.

2. Hubkolbenmaschine gemäß Anspruch 1,
**dadurch gekennzeichnet,**
**dass** die Hubkolbenmaschine (1) eine Verdichterstufe mit einem Hubkolben aufweist.

3. Hubkolbenmaschine gemäß Anspruch 1,
**dadurch gekennzeichnet,**
**dass** die Anschlüsse des Kühlmediumkanals (17a, b, c) im Zylinderkopfbereich (3) angeordnet sind.

4. Hubkolbenmaschine gemäß Anspruch 1,
**dadurch gekennzeichnet,**
**dass** im Zylindergehäuse (2) ein Wärmetauscherbereich (22) vorgesehen ist, durch den zumindest ein Teilabschnitt des Kühlmediumkanals (17a) und ein Teilabschnitt des Auslasskanals (16b, d) verlaufen.

5. Hubkolbenmaschine gemäß Anspruch 4,
**dadurch gekennzeichnet,**
**dass** der Wärmetauscherbereich (22) im Zylindergehäuse derart positioniert ist, dass zumindest ein Teilabschnitt des Kühlmediumkanals (17a) und zumindest ein Teilabschnitt des Auslasskanals (16b, d) durch das Zylindergehäuse (2) und die Ventilträgerplatte (4) gebildet werden.

6. Hubkolbenmaschine gemäß Anspruch 5,
**dadurch gekennzeichnet,**
**dass** der Teilabschnitt des Kühlmediumkanals (17a) und zumindest ein Teilabschnitt des Auslasskanals (16 b, d) in einer Ebene (E-E) angeordnet sind.

7. Hubkolbenmaschine gemäß Anspruch 1,
**dadurch gekennzeichnet,**
**dass** im Zylinderkopf (3) vier Ebenen (A-A, B-B, C-C, D-D) vorgesehen sind, wobei in jeder Ebene zumindest ein Kanal verläuft, der ein Teilabschnitt des Kühlmediumkanals (17 b, c) oder des Auslasskanals (16a, c, e, f) ist, so dass eine Kühlebene oder eine Auslasskanalebene gebildet wird.

8. Hubkolbenmaschine gemäß Anspruch 7,
**dadurch gekennzeichnet,**
**dass** die Kühlebenen und die Auslasskanalebenen abwechseln geschichtet sind und die Teilabschnitte des Kühlmediumkanals (17b, c) oder des Auslasskanals (16a, c, e, f) über Verbindungskanäle (20 a, b, c, d) (21a, b, c, d) miteinander verbunden sind.

9. Hubkolbenmaschine gemäß Anspruch 6,
**dadurch gekennzeichnet,**
**dass** zumindest ein Teilabschnitt des Auslasskanals (16f) durch die Kopfplatte (10) und eine Trennplatte (9) begrenzt ist.

10. Hubkolbenmaschine gemäß Anspruch 6,
**dadurch gekennzeichnet,**
**dass** zumindest ein Teilabschnitt des Kühlmediumkanals (17c) durch die Trennplatte (9) und die Kammerplatte (8) begrenzt ist.

11. Hubkolbenmaschine gemäß Anspruch 6,
**dadurch gekennzeichnet,**
**dass** zumindest ein Teilabschnitt des Auslasskanals (16a, c) durch das Ventilträgerelement (4, 5) und die Kammerplatte (8) begrenzt ist.

12. Hubkolbenmaschine gemäß Anspruch 6,
**dadurch gekennzeichnet,**
**dass** zumindest ein Teilabschnitt des Kühlmediumkanals (17b) durch die Ventilträgerplatte (4) und die Ventilzwischenplatte (7) begrenzt ist.

13. Hubkolbenmaschine gemäß Anspruch 1,
**dadurch gekennzeichnet,**
**dass** im Zylinderkopf (3) ein Einlassraum (15) vorgesehen ist, der sich über alle Schichtbauteile (4, 7, 8, 9,10) erstreckt und gegenüber dem Zylinderraum im Zylindergehäuse (2) mittels eines Lamellenventils (5) abgegrenzt ist.

14. Hubkolbenmaschine gemäß Anspruch 1,
**dadurch gekennzeichnet,**
**dass** im Zylinderkopf (3) ein Ventilstößel (11) angeordnet ist, mittels dem das Lamellenventil (5) von der Ventilträgerplatte (4) abhebbar ist, so dass der Einlassraum (15) und der Zylinderraum (23) verbunden werden.

15. Hubkolbenmaschine gemäß Anspruch 14,
**dadurch gekennzeichnet,**
**dass** der Ventilstößel (11) mittels Federkraft in eine erste Stellung bewegbar ist und mittels eines Druckmediums über den Steuerluftanschluss (14) in eine zweite Stellung, in der das Lamellenventil (5) geöffnet ist, bewegbar ist.

## Claims

1. Reciprocating piston machine (1) for compressing a fluid, in particular ambient air, for a compressed air system of a motor vehicle, comprising a cylinder housing (2) in which a piston can be moved, and a cylinder head (3) which is constructed in layers from multiple plates (4, 7, 8, 9, 10) and comprises a valve carrier element (4, 7) with an outlet valve (6), a chamber plate (8) and a head plate (10) with a pressure medium outlet (13), wherein a cooling medium channel (17a, b, c) for cooling at least a partial region of the cylinder head (3), and an outlet channel (16a, b, c, d, e, f) for connecting the outlet valve (6) to the pressure medium outlet (13), are provided and extend at least in portions through components of the cylinder head (3),
wherein
at least a partial portion of the cooling medium channel (17a, b, c) and a partial portion of the outlet channel (16a, b, c, d, e, f) are assigned to the cylinder housing (2).

2. Reciprocating piston machine according to Claim 1,
**characterized in that**
the reciprocating piston machine (1) has a compressor stage with a reciprocating piston.

3. Reciprocating piston machine according to Claim 1,
**characterized in that**
the connections of the cooling medium channel (17a, b, c) are arranged in the cylinder head region (3).

4. Reciprocating piston machine according to Claim 1,
**characterized in that**
a heat exchanger region (22) is provided in the cylinder housing (2), wherein at least a partial portion of the cooling medium channel (17a) and a partial portion of the outlet channel (16b, d) run through said region (22).

5. Reciprocating piston machine according to Claim 4,
**characterized in that**
the heat exchanger region (22) is positioned in the cylinder housing such that at least a partial portion of the cooling medium channel (17a) and at least a partial portion of the outlet channel (16b, d) are formed by the cylinder housing (2) and the valve carrier plate (4).

6. Reciprocating piston machine according to Claim 5,
**characterized in that**
the partial portion of the cooling medium channel (17a) and at least a partial portion of the outlet channel (16b, d) are arranged in a plane (E-E).

7. Reciprocating piston machine according to Claim 1,
**characterized in that**
four planes (A-A, B-B, C-C, D-D) are provided in the cylinder head (3), wherein each plane contains at least one channel which is a partial portion of the cooling medium channel (17b, c) or of the outlet channel (16a, c, e, f) so as to form a cooling plane or an outlet channel plane.

8. Reciprocating piston machine according to Claim 7,
**characterized in that**
the cooling planes and the outlet channels planes are arranged in alternate layers, and the partial portions of the cooling medium channel (17b, c) or of the outlet channel (16a, c, e, f) are connected together via connecting channels (20a, b, c, d) (21a, b, c, d).

9. Reciprocating piston machine according to Claim 6,
**characterized in that**
at least a partial portion of the outlet channel (16f) is delimited by the head plate (10) and a separating plate (9).

10. Reciprocating piston machine according to Claim 6,
**characterized in that**
at least a partial portion of the cooling medium channel (17c) is delimited by the separating plate (9) and the chamber plate (8).

11. Reciprocating piston machine according to Claim 6,
**characterized in that**
at least a partial portion of the outlet channel (16a, c) is delimited by the valve carrier element (4, 5) and the chamber plate (8).

12. Reciprocating piston machine according to Claim 6,
**characterized in that**
at least a partial portion of the cooling medium channel (17b) is delimited by the valve carrier plate (4) and the valve intermediate plate (7).

13. Reciprocating piston machine according to Claim 1,
**characterized in that**
an inlet space (15) is provided in the cylinder head (3), which extends over all layer components (4, 7, 8, 9, 10) and is separated from the cylinder space in the cylinder housing (2) by means of a reed valve (5).

14. Reciprocating piston machine according to Claim 1,
**characterized in that**
a valve tappet (11) is arranged in the cylinder head (3), by means of which the reed valve (5) can be lifted away from the valve carrier plate (4) so that the inlet space (15) and the cylinder space (23) are connected.

15. Reciprocating piston machine according to Claim 14,
**characterized in that**
the valve tappet (11) can be moved into a first position by spring force, and can be moved into a second position, in which the reed valve (5) is opened, by a pressure medium via the control air connection (14).

## Revendications

1. Machine à piston alternatif (1) pour la compression d'un fluide, notamment l'air ambiant, pour un système d'air comprimé d'un véhicule automobile, comprenant un corps de cylindre (2) dans lequel un piston est mobile et une culasse (3) construite en couches à partir de plusieurs plaques (4, 7, 8, 9, 10), comprenant un élément de support de soupape (4, 7) avec une soupape de sortie (6), une plaque de chambre (8) et une plaque de tête (10) avec une sortie de fluide sous pression (13), un canal de fluide de refroidissement (17a, b, c) pour le refroidissement d'au moins une zone partielle de la culasse (3) et un canal de sortie (16a, b, c, d, e, f) pour la liaison de la soupape de sortie (6) avec la sortie de fluide sous pression (13) étant prévus, lesquels s'étendent au moins par sections à travers des composants de la culasse (3),
au moins une section partielle du canal de fluide de refroidissement (17a, b, c) et une section partielle du canal de sortie (16a, b, c, d, e, f) étant associées au corps de cylindre (2).

2. Machine à piston alternatif selon revendication 1, **caractérisée en ce que** la machine à piston alternatif (1) présente un étage de compression avec un piston alternatif.

3. Machine à piston alternatif selon revendication 1, **caractérisée en ce que** les raccords du canal de fluide de refroidissement (17a, b, c) sont agencés dans la zone de la culasse (3).

4. Machine à piston alternatif selon revendication 1, **caractérisée en ce qu'**une zone d'échangeur de chaleur (22) est prévue dans le corps de cylindre (2), à travers laquelle s'étendent au moins une section partielle du canal de fluide de refroidissement (17a) et une section partielle du canal de sortie (16b, d).

5. Machine à piston alternatif selon revendication 4, **caractérisée en ce que** la zone d'échangeur de chaleur (22) est positionnée dans le corps de cylindre de telle sorte qu'au moins une section partielle du canal de fluide de refroidissement (17a) et au moins une section partielle du canal de sortie (16b, d) sont formées par le corps de cylindre (2) et la plaque de support de soupape (4).

6. Machine à piston alternatif selon la revendication 5, **caractérisée en ce que** la section partielle du canal de fluide de refroidissement (17a) et au moins une section partielle du canal de sortie (16b, d) sont agencées dans un plan (E-E).

7. Machine à piston alternatif selon revendication 1, **caractérisée en ce que** quatre plans (A-A, B-B, C-C, D-D) sont prévus dans la culasse (3), dans chaque plan s'étendant au moins un canal qui est une section partielle du canal de fluide de refroidissement (17b, c) ou du canal de sortie (16a, c, e, f), de telle sorte qu'un plan de refroidissement ou un plan de canal de sortie est formé.

8. Machine à piston alternatif selon la revendication 7, **caractérisée en ce que** les plans de refroidissement et les plans de canal de sortie sont disposés par couches en alternance et les sections partielles du canal de fluide de refroidissement (17b, c) ou du canal de sortie (16a, c, e, f) sont reliées entre elles par l'intermédiaire de canaux de liaison (20a, b, c, d) (21a, b, c, d).

9. Machine à piston alternatif selon la revendication 6, **caractérisée en ce qu'**au moins une section partielle du canal de sortie (16f) est délimitée par la plaque de tête (10) et une plaque de séparation (9).

10. Machine à piston alternatif selon la revendication 6, **caractérisée en ce qu'**au moins une section partielle du canal de fluide de refroidissement (17c) est délimitée par la plaque de séparation (9) et la plaque de chambre (8).

11. Machine à piston alternatif selon revendication 6, **caractérisée en ce qu'**au moins une section partielle du canal de sortie (16a, c) est délimitée par l'élément de support de soupape (4, 5) et la plaque de chambre (8).

12. Machine à piston alternatif selon revendication 6, **caractérisée en ce qu'**au moins une section partielle du canal de fluide de refroidissement (17b) est délimitée par la plaque de support de soupape (4) et la plaque intermédiaire de soupape (7).

13. Machine à piston alternatif selon revendication 1, **caractérisée en ce qu'**une chambre d'admission (15) est prévue dans la culasse (3), qui s'étend sur tous les composants en couches (4, 7, 8, 9, 10) et qui est délimitée par rapport à la chambre de cylindre dans le corps de cylindre (2) au moyen d'une soupape à lamelles (5) .

14. Machine à piston alternatif selon revendication 1, **caractérisée en ce qu'**un poussoir de soupape (11) est agencé dans la culasse (3), au moyen duquel la soupape à lamelles (5) peut être soulevée de la plaque de support de soupape (4), de telle sorte que la chambre d'admission (15) et la chambre de cylindre (23) sont reliées.

15. Machine à piston alternatif selon revendication 14, **caractérisée en ce que** le poussoir de soupape (11) peut être déplacé dans une première position au moyen d'une force de ressort et peut être déplacé au moyen d'un fluide sous pression par l'intermédiaire du raccord d'air de commande (14) dans une deuxième position dans laquelle la soupape à lamelles (5) est ouverte.
